# DEMANDE DE BREVET EUROPEEN

(11) **EP 4 749 809 A1**
(43) Date de publication de la demande: **27.05.2026**
(21) Numéro de dépôt: 25215205.3
(22) Date de dépôt: 12.11.2025
(51) Int. Cl.: H01M 50/581, H01M 10/48, H01M 50/545, H01M 50/553, H01M 50/559

(54) **UNITÉ DE STOCKAGE D'ÉNERGIE ÉLECTRIQUE ET BATTERIE**

(30) Priorité: 20.11.2024 FR 2412700
(71) Demandeur: Commissariat à l'Energie Atomique et aux Energies Alternatives, 75015 Paris (FR)
(72) Inventeur: DAUCHY, Julien, 38054 Grenoble Cedex 09 (FR); CHATROUX, Daniel, 38054 Grenoble Cedex 09 (FR); CHAUVIN, Julien, 38054 Grenoble Cedex 09 (FR)
(74) Mandataire: Hautier IP

(57) **Abrégé**

L'invention concerne une unité de stockage d'énergie électrique (1), comprenant des première (11) et deuxième (12) bornes électriques, un accumulateur (13) couplé électriquement aux première et deuxième bornes, et un système de protection (14) du type court-circuit, ce dernier comprenant : un premier élément (141) conducteur électrique couplé à la première borne, un deuxième élément (142) conducteur électrique couplé à la deuxième borne, et un organe élastique (1421) conducteur électrique couplé au deuxième élément caractérisé en ce que le système de protection comprend un troisième élément (143) isolant électrique et thermo-déformable, ce dernier étant configuré pour occuper un premier état dans lequel le troisième élément isole électriquement l'organe élastique avec le premier élément, et pour occuper un deuxième état, dans lequel le troisième élément se déforme pour que l'organe élastique vienne au contact du premier élément.

## Description

### DOMAINE TECHNIQUE

La présente invention concerne le domaine de la gestion du stockage d'énergie électrique. Elle trouve pour application particulièrement avantageuse le domaine des éléments de sécurité de ce stockage d'énergie.

### ETAT DE LA TECHNIQUE

Les accumulateurs électriques, et en particulier les accumulateurs électrochimiques, sont généralement conditionnés sous forme de batteries dans lesquelles des éléments unitaires, généralement dénommés cellules, sont connectés en série et/ou en parallèle. L'association de ces éléments unitaires en série permet d'obtenir des tensions plus élevées et leur association en parallèle permet d'obtenir des capacités plus élevées pour des énergies stockées plus importantes et la possibilité de fournir des puissances électriques supérieures.

Dans les batteries connues qui comportent au moins une branche d'accumulateurs connectés en série, la défaillance de l'un des accumulateurs entraine généralement une mise hors service de l'ensemble des accumulateurs de cette branche.

Les batteries connues sont généralement associées à des circuits de gestion, appelés classiquement BMS (Battery Management System, terme anglais pour système de gestion électronique de la batterie) contrôlant par exemple les températures et les tensions des accumulateurs. Ces circuits de gestion peuvent être munis d'éléments coupe-circuit, tels que des transistors, des relais ou des contacteurs, qui agissent en cas de défaillance d'un accumulateur, en déconnectant la batterie dans son ensemble ou au moins la branche dans laquelle l'accumulateur défectueux est monté en série avec d'autres accumulateurs. Pour pallier le défaut d'un accumulateur, une branche entière de la batterie, voire l'ensemble de la batterie, est ainsi généralement rendue inopérante.

Il existe des solutions pour isoler un accumulateur présentant un défaut au sein d'une batterie.

La demande de brevet FR3118335A1 décrit un dispositif et un procédé d'isolement d'un accumulateur électrique d'un circuit électrique en assurant la continuité de ce circuit électrique, dans lesquels la fusion d'un matériau conducteur électrique isole l'accumulateur par un transfert à l'état liquide du matériau conducteur électrique sur un dispositif de pontage permet d'assurer le passage du courant et donc l'isolation de l'accumulateur tout en assurant la continuité du circuit de courant.

Par ailleurs, la demande de brevet FR3137225A1 décrit un dispositif et un procédé d'isolement d'un accumulateur électrique d'un circuit électrique en assurant la continuité de ce circuit électrique dans lesquels l'échauffement, puis la fusion, d'un matériau conducteur électrique isole l'accumulateur. En particulier, un transfert de la chaleur à travers un conducteur thermique isolant électrique provoque la fusion du matériau conducteur électrique sur un dispositif de pontage. Ceci permet d'isoler l'accumulateur et d'assurer le passage du courant pour la continuité du circuit de courant.

Cependant ces technologies présentent l'inconvénient de s'activer à des températures élevées. De ce fait, dans le cas où un accumulateur est concerné par un défaut et chauffe suite à celui-ci, ce défaut peut alors se propager aux accumulateurs voisins et même à toute la batterie.

Un objet de la présente invention est donc de proposer une solution améliorant l'isolement d'un accumulateur électrique positionné dans une batterie tout en maintenant une continuité de service.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect on prévoit une unité de stockage d'énergie électrique, comprenant :
- des première et deuxième bornes électriques, dites de puissance,
- un accumulateur couplé électriquement aux première et deuxième bornes de puissance, et
- un système de protection du type court-circuit, le système de protection comprenant :
   ∘ un premier élément conducteur électrique couplé électriquement à la première borne de puissance,
   ∘ un deuxième élément conducteur électrique couplé électriquement à la deuxième borne de puissance, et
   ∘ un organe élastique conducteur électrique couplé électriquement au deuxième élément.

Le système de protection comprend un troisième élément isolant électrique et thermo-déformable, le troisième élément étant configuré pour occuper un premier état, lorsqu'une température du troisième élément est inférieure ou égale à un seuil de température, dans lequel le troisième élément isole électriquement l'organe élastique avec le premier élément, et pour occuper un deuxième état, lorsque la température du troisième élément est strictement supérieure au seuil de température, dans lequel le troisième élément se déforme pour que l'organe élastique vienne au contact du premier élément.

Ainsi, l'invention propose une solution afin de prévenir les risques liés à l'échauffement d'un accumulateur suite à un courant qu'il ne peut supporter, par exemple suite à un état de surcharge ou de sur-décharge d'un accumulateur sain, vieilli ou présentant un défaut interne. Un tel système de protection est configuré pour isoler l'accumulateur défectueux tout en permettant au courant de circuler en parallèle des bornes de puissance. Une telle unité est adaptée pour permettre de continuer à utiliser d'autres accumulateurs. L'invention évite additionnellement une ouverture globale du circuit et un arrêt de la fourniture d'énergie, suite à la détection d'un défaut.

De plus, le déclenchement naturel relatif à une température trop élevée permet d'assurer des hauts niveaux de sûreté de fonctionnement, sans nécessiter des électroniques redondantes et/ou qualifiées. La sûreté de déclenchement telle que le permet l'invention est plus particulièrement importante pour les applications dont le niveau de sécurité exigé est très élevé comme l'aéronautique par exemple.

Contrairement aux règles de l'art établies pour la protection électrique, selon lesquelles un court-circuit est à éviter autant que possible, l'invention met à profit un court-circuit pour la réalisation des fonctions du dispositif d'isolement. Ainsi, l'invention peut être utilisée seule ou combinée avec des dispositifs de pontage de l'état de l'art.

Un autre aspect concerne une batterie comprenant une pluralité d'unités de stockage d'énergie électrique telles que définies ci-avant, les unités de stockage d'énergie électrique étant couplées électriquement entre elles par leurs première et deuxièmes bornes de puissances respectives.

Ainsi, vis-à-vis de l'état de l'art qui est de procéder habituellement à quelques mesures de température locales au sein de l'ensemble d'un pack batterie et d'ouvrir la totalité du circuit électrique en cas de défaut, l'invention peut se placer sur chaque accumulateur du pack batterie et peut ouvrir uniquement le circuit de l'accumulateur en défaut tout en assurant un pontage pour le courant, pour assurer la continuité de service de la fourniture d'énergie.

L'invention permet d'accroitre la sécurité, d'une part, au niveau du pack batterie en agissant plus rapidement que les moyens de protections thermiques habituels, où il faut que la température de la cellule en défaut se propage à d'autres cellules voisines jusqu'au capteur de température, avant d'être détectée. Grâce à l'invention, la température maximale atteinte par la cellule en défaut est limitée. D'autre part, au niveau du système ou de l'application, la continuité de fonctionnement de l'ensemble peut s'avérer être un élément clé de la sécurité des personnes, dans certaines applications, notamment dans les transports autonomes, la navigation maritime ou aérienne.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente l'invention selon un mode de réalisation.
La figure 2 représente une vue en coupe selon la direction A-A' de l'invention illustrée à la figure 1.
La figure 3A représente l'invention pour un accumulateur cylindrique selon un autre mode de réalisation.
La figure 3B représente une vue de face de l'invention pour un accumulateur en sachet souple selon un autre mode de réalisation.
La figure 3C représente une vue de côté de l'invention illustrée à la figure 3B.
La figure 3D représente l'invention pour un accumulateur de type pavé droit selon un autre mode de réalisation.
Les figures 4A à 4B représentent l'invention pour un accumulateur cylindrique selon d'autres modes de réalisation.
Les figures 5A à 5B représentent respectivement l'invention pour plusieurs accumulateurs cylindriques en parallèles et une batterie selon un mode de réalisation de l'invention.
Les figures 6A à 6B représentent respectivement une vue de face schématique et une vue de côté d'un autre mode de réalisation de l'invention.
La figure 7 représente un autre mode de réalisation de l'invention pour plusieurs accumulateurs cylindrique en parallèles.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, le troisième élément est configuré pour coopérer avec l'organe élastique de sorte que, lorsque le troisième élément occupe le premier état, le troisième élément met l'organe élastique sous contrainte, et lorsque le troisième élément occupe le deuxième état, le troisième élément se déforme pour permettre un relâchement de la contrainte exercée sur l'organe élastique.

Ainsi, le relâchement de la contrainte va permettre à l'organe élastique de se déplacer par rapport au premier élément. En particulier, l'organe élastique va se déplacer jusqu'à venir au contact avec le premier élément.

Selon un exemple, lorsque le troisième élément occupe le premier état, le troisième élément est placé entre l'organe élastique et le premier élément.

Ainsi, le troisième élément assure l'isolation électrique entre le premier élément et l'organe élastique, et donc l'isolation électrique entre le premier élément et le deuxième élément.

Selon un exemple, l'organe élastique comprend une pièce ressort.

Ainsi, lorsque le troisième élément se déforme, au moins une partie de la pièce ressort entre en contact électrique avec le premier élément conducteur.

Selon un exemple, l'organe élastique comprend au moins une partie mobile en déplacement par rapport au premier élément, entre une première position, dans laquelle le troisième élément occupe le premier état et ladite au moins une partie mobile est isolée électriquement avec le premier élément, et une deuxième position, dans laquelle le troisième élément occupe le deuxième état et ladite au moins une partie mobile est en contact avec le premier élément.

Selon un exemple, le seuil de température est compris entre 60°C et 100°C, de préférence entre 60°C et 80°C.

Ainsi, le troisième élément peut présenter avantageusement une température de fusion supérieure à la température maximale de fonctionnement d'un accumulateur mais inférieure à la température d'emballement de l'accumulateur.

Selon un exemple, le troisième élément est un polymère, par exemple un polymère pris parmi la polyoléfine, le polyéthylène basse densité, les copolymères d'éthylène, les copolymères de propylène.

Ainsi, lorsque le troisième élément atteint le seuil de température, ce dernier fond, c'est-à-dire qu'il effectue une transition de phase où il perd sa résistance mécanique, flue et permet alors au contact électrique de la traverser, et permet donc un contact électrique entre le premier élément et l'organe élastique.

Selon un exemple, le troisième élément est un polymère rétractable.

Ainsi, lorsque le troisième élément atteint un seuil de température de rétractation, il y a un contact direct entre le premier et l'organe élastique.

Selon un exemple, le système de protection comprend un élément de maintien configuré pour maintenir mécaniquement le troisième élément en contact avec le premier élément conducteur.

Ainsi, la rétractation du troisième élément maintenu mécaniquement permet à l'organe élastique d'être en contact mécanique, c'est-à-dire un couplage électrique direct, avec le premier élément conducteur électrique et d'assurer ainsi la fonction de pontage.

Selon un exemple, le système de protection comprend un dispositif de coupure, le dispositif de coupure ayant deux bornes couplées électriquement, soit respectivement avec la première borne de puissance et le premier élément, soit respectivement avec la deuxième borne de puissance et le deuxième élément, le dispositif de coupure étant configuré de sorte à fondre pour ouvrir le circuit entre ses bornes lorsque la température du troisième élément est strictement supérieure au seuil de température.

Ainsi, le dispositif de coupure fond, ce qui provoque la déconnexion d'une des bornes de puissance de l'accumulateur. Du fait de cette déconnexion, l'accumulateur n'est plus dans le circuit de courant et n'est donc plus traversé par un courant.

Selon un exemple, le système de protection comprend une résistance, la résistance étant couplée électriquement en parallèle des deux bornes du dispositif de coupure, la résistance étant configurée de sorte à décharger l'accumulateur lorsque le dispositif de coupure a fondu pour ouvrir le circuit entre ses bornes.

Ainsi, la résistance permet d'augmenter fortement la sécurité puisque l'accumulateur déchargé ne renfermera plus une énergie électrique interne suffisante apte à initier un emballement thermique.

Selon un exemple, la résistance est positionnée en contact thermique avec le troisième élément.

Cela permet ainsi de poursuivre la fusion du troisième élément, plus particulièrement, dans le cas des réalisations avec une pluralité de zones de contacts entre l'organe élastique et le troisième élément, afin que chaque contact puisse relier les premier et deuxième éléments conducteurs sans qu'il reste des contacts isolés par le matériau du troisième élément non fondu localement.

Selon un exemple, la résistance est positionnée en contact thermique avec le deuxième élément.

Cela permet de transmettre la chaleur de la résistance à l'organe élastique et ainsi poursuivre la fusion du troisième élément.

Selon un exemple, la résistance est de type résistance à coefficient de température et est configurée de sorte à avoir une température de transition supérieure au seuil de température.

Cela permet de s'assurer que la résistance à une température de transition supérieure à la température de fusion du matériau du troisième élément.

Selon un exemple, chaque système de protection comprend un dispositif de coupure.

Selon un exemple, chaque système de protection comprend une résistance.

Cela permet ainsi que n'importe quel accumulateur de la batterie en défaut soit déconnecté efficacement et rapidement du reste de la batterie.

Il est précisé que dans le cadre de la présente invention, l'expression « adapté pour isoler un accumulateur électrique d'un circuit électrique en assurant la continuité de ce circuit électrique » signifie que le dispositif permet de mettre hors du circuit du courant électrique un accumulateur (notamment parce qu'il est défectueux) et que cet accumulateur est remplacé dans le circuit du courant électrique auquel il était connecté par un pontage (« by-pass », en langue anglaise) permettant de maintenir la continuité dans ce circuit électrique. Lorsque ce circuit électrique comporte une charge alimentée par d'autres accumulateurs électriques en série avec l'accumulateur isolé, l'isolement de ce dernier et le pontage permet aux autres accumulateurs électriques de continuer à alimenter la charge.

On entend par élément thermo-déformable, un élément qui lors de l'atteinte d'un seuil de température, dite température de transformation, peut se déformer. L'élément thermo-déformable peut, soit fondre (on parle alors d'une température de fusion), soit fluer (on parle alors d'une température de fluage), soit encore se rétracter (on dit que l'élément est rétractable, et on parle de température de rétractation). Lorsque l'élément fond, l'élément effectue une transition solide vers liquide. Lorsque l'élément flue, l'élément effectue une transition de phase où il perd sa résistance mécanique, il peut alors se déformer lorsqu'il est soumis à une contrainte, et peut être traversé par un autre élément. Lorsque l'élément se rétracte, l'élément se raccourcit sur une longueur tout en conservant une même épaisseur, l'épaisseur étant mesurée selon une direction perpendiculaire à la longueur.

Il est précisé que, dans le cadre de la présente invention, les termes « sur », « surmonte », « recouvre », « sous-jacent », en « vis-à-vis » et leurs équivalents ne signifient pas forcément « au contact de ».

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces ».

Il est précisé que dans le cadre de la présente invention, les expressions « A couplé à B », « A couplé électriquement à B », « A relié à B » ou « A relié électriquement à B » ou « A connecté à B » sont synonymes de « A est en connexion électrique avec B » et ne signifie pas nécessairement qu'il n'existe pas d'organe entre A et B. Ainsi ces expressions s'entendent d'une connexion électrique entre deux éléments, cette connexion pouvant ou non être directe, cela signifie qu'il est possible qu'entre un premier dispositif A et un deuxième dispositif B qui sont électriquement connectés, reliés ou couplés, un courant circule en A, en B, et sur le parcours reliant A à B, ce parcours pouvant ou non comprendre d'autres équipements électriques. Le dispositif A pouvant être couplé électriquement à B, soit en série, soit en parallèle.

A l'inverse, dans le cadre de la présente invention, le terme « électriquement connecté directement » ou « relié directement » s'entend d'une connexion électrique directe entre deux éléments. Cela signifie qu'entre un premier dispositif A et un deuxième dispositif B qui sont électriquement connectés directement aucun autre équipement n'est présent, autre qu'une connexion électrique (comme un fil électrique) ou plusieurs connexions électriques.

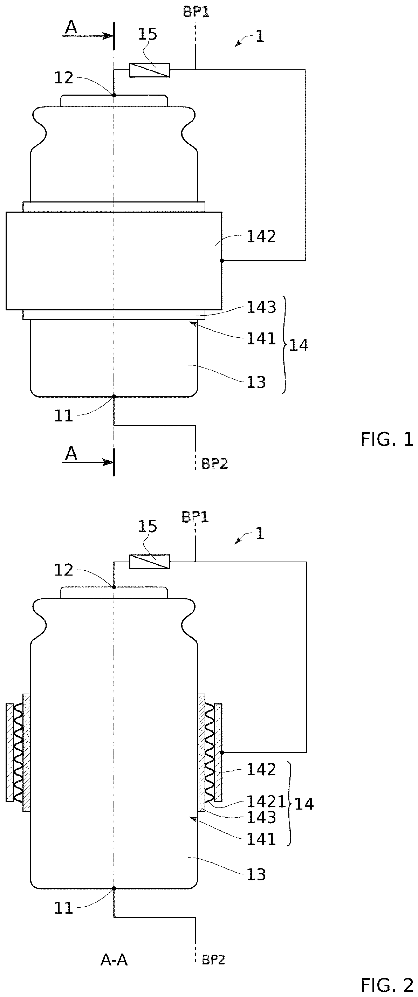

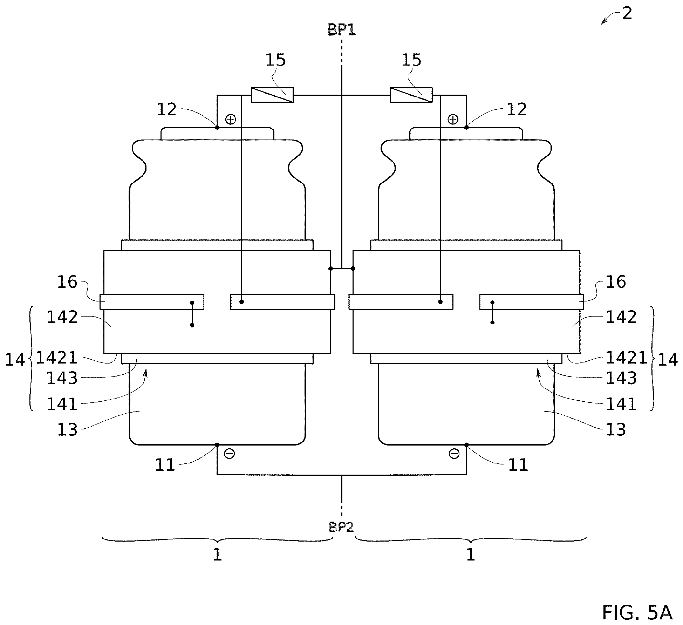

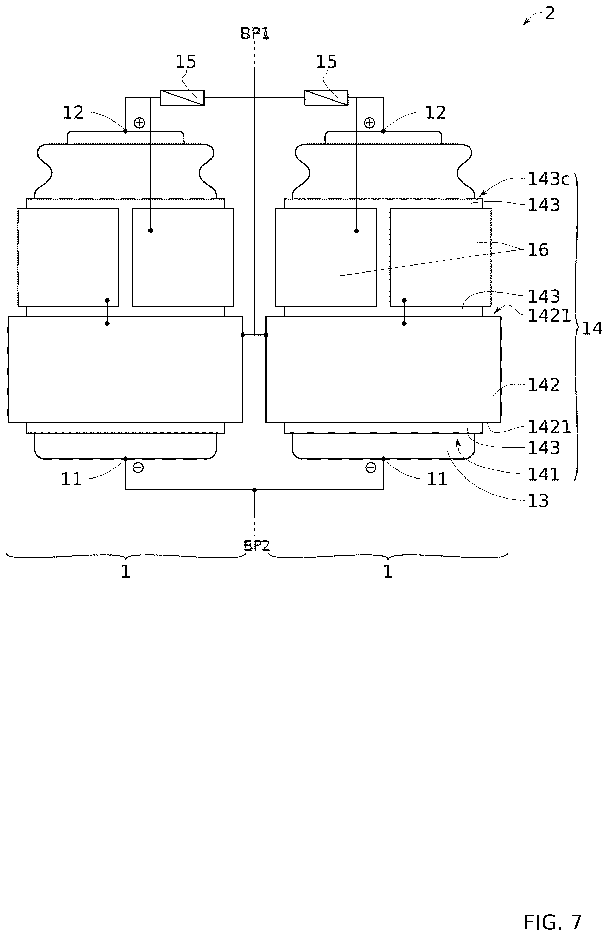

Sur les figures 1 à 3B ; 3D à 4B ; et 6A, on a représenté une unité de stockage d'énergie électrique 1. Sur les figures 5A à 5B ; et 7, on a représenté une batterie 2 comprenant plusieurs unités de stockage d'énergie électriques 1.

De manière générale, une unité de stockage 1 permet de déconnecter électriquement un accumulateur 13 en défaut dans une batterie 2 présentant une température anormale. Par exemple, en effectuant un pontage électrique de cet accumulateur 13 ou l'ensemble des accumulateurs 13 en série ou en parallèle avec celui en défaut.

L'invention va maintenant être décrite en référence aux figures 1 à 7 et peut s'appliquer à tous les modes de réalisation de l'invention.

L'invention consiste en une unité de stockage d'énergie électrique 1. L'unité de stockage 1 comprend une première borne électrique 11, dite de puissance. L'unité de stockage 1 comprend également une deuxième borne électrique 12, dite de puissance. L'une parmi la première borne de puissance 11 et la deuxième borne de puissance 12 est avantageusement une borne positive. L'autre parmi la première borne de puissance 11 et la deuxième borne de puissance 12 est avantageusement une borne négative.

L'unité de stockage 1 comprend également un accumulateur 13. L'accumulateur 13 permet de stocker et restituer l'énergie électrique circulant entre la première borne de puissance 11 et la deuxième borne de puissance 12. L'accumulateur 13 est ainsi couplé aux première 11 et deuxième 12 bornes de puissance.

L'unité de stockage 1 comprend un système de protection 14 du type court-circuit. Le système de protection 14 permet d'isoler l'accumulateur 13 par rapport au reste du circuit électrique. Plus précisément, le système de protection 14 permet d'isoler l'accumulateur 13 lorsque l'accumulateur 13 atteint un seuil de température qui peut être représentatif d'un défaut de l'accumulateur 13. Pour ce faire, le système de protection 14 comprend un premier élément conducteur électrique 141. Le premier élément conducteur électrique 141 est avantageusement couplé à la première borne de puissance 11. Le système de protection 14 comprend également un deuxième élément conducteur électrique 142. Le deuxième élément conducteur électrique 142 est alors couplé à la deuxième borne de puissance 12. En particulier, le système de protection 14 comprend un organe élastique 1421 conducteur électrique. L'organe élastique 1421 est couplé électriquement au deuxième élément 142. Avantageusement, l'organe élastique 1421 est configuré pour se déplacer par rapport au premier élément conducteur 141.

Le système de protection 14 comprend ensuite un troisième élément 143. Le troisième élément 143 est un isolant électrique et est thermo-déformable. Par exemple, le troisième élément présente une première surface 143a en regard du premier élément conducteur 141. Le troisième élément 143 présente également une deuxième surface 143b située en regard de l'organe élastique 1421. La première surface 143a est de ce fait opposée à la deuxième surface 143b.

Plus particulièrement, le troisième élément 143 est configuré pour occuper un premier état, lorsqu'une température du troisième élément 143 est inférieure ou égale à un seuil de température, et pour occuper un deuxième état, lorsque la température du troisième élément 143 est strictement supérieure au seuil de température. Dans le premier état, le troisième élément 143 isole électriquement l'organe élastique 1421 avec le premier élément 141. Dans le deuxième état, le troisième élément 143 se déforme pour que l'organe élastique 1421 vienne au contact du premier élément 141.

Par ailleurs, le troisième élément 143 est configuré pour coopérer avec l'organe élastique 1421 de sorte que, lorsque le troisième élément 143 occupe le premier état, le troisième élément 143 met l'organe élastique 1421 sous contrainte, et lorsque le troisième élément 143 occupe le deuxième état, le troisième élément 143 se déforme pour permettre un relâchement de la contrainte exercée sur l'organe élastique 1421. Ainsi, le relâchement de la contrainte va permettre à l'organe élastique 1421 de se déplacer par rapport au premier élément 141. En particulier, l'organe élastique 1421 va se déplacer jusqu'à venir au contact avec le premier élément 141.

Avantageusement, lorsque le troisième élément 143 occupe le premier état, le troisième élément 143 est placé entre l'organe élastique 1421 et le premier élément 141. Ainsi, le troisième élément 143 assure l'isolation électrique entre le premier élément 141 et l'organe élastique 1421, et donc l'isolation électrique entre le premier élément 141 et le deuxième élément 142.

En d'autres termes, lorsque la température du troisième élément 143 est inférieure ou égale au seuil de température, la première surface 143a présente au moins une première zone en contact avec le premier élément conducteur 141 et la deuxième surface 143b présente au moins une deuxième zone en contact avec le deuxième élément conducteur 142.

Lorsque la température du troisième élément 143 est strictement supérieure au seuil de température, le troisième élément 143 est configuré pour se déformer de manière qu'au moins une première zone n'est plus en contact avec le premier élément conducteur 141, et que la deuxième zone n'est plus en contact avec l'organe élastique 1421. Dans cette configuration, l'organe élastique 1421 vient en contact électrique avec le premier élément conducteur 141.

Par exemple, lorsque la température du premier élément conducteur 141 atteint la température de fusion du troisième élément 143 isolant électrique thermo-déformable, un contact électrique peut s'établir entre le premier élément 141 et le deuxième élément 142, par l'intermédiaire du contact entre le premier élément 141 et l'organe élastique 1421. Le contact électrique entre le premier élément 141 et le deuxième élément 142 conducteurs électriques donne lieu à un court-circuit des première 11 et deuxième 12 bornes de puissance qui assure une fonction de pontage, qui laisse alors passer le courant de la mise en série d'accumulateurs 13.

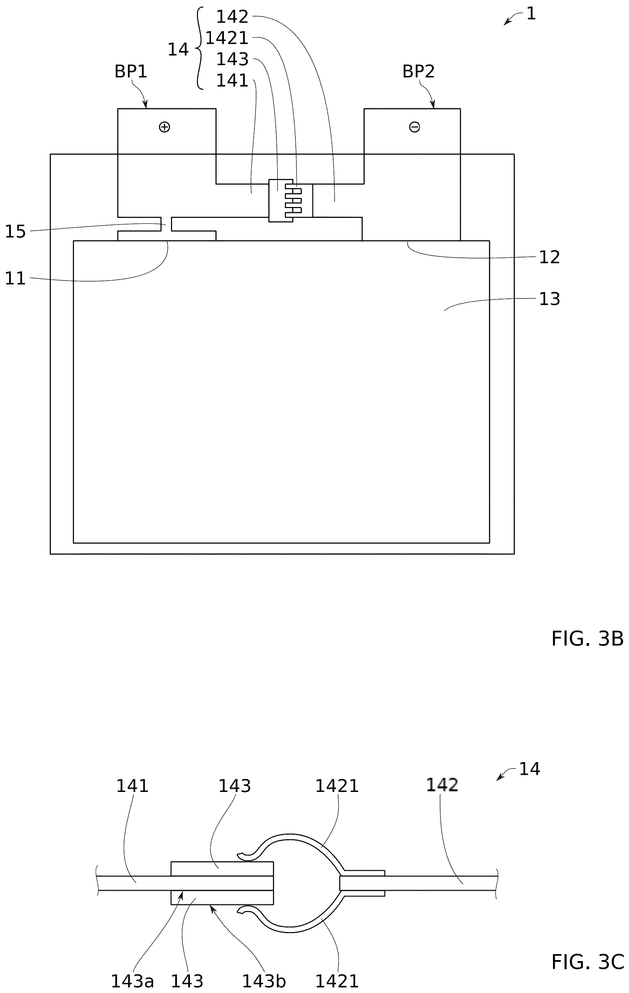

Selon un mode de réalisation, le système de protection 14 comprend un dispositif de coupure 15. Le dispositif de coupure 15 est couplé aux première 11 et deuxième 12 bornes de puissance. En particulier, le dispositif de coupure 15 a deux bornes couplées électriquement, soit respectivement avec la première borne de puissance 11 et le premier élément 141, comme illustré sur la figure 3B, soit respectivement avec la deuxième borne de puissance 12 et le deuxième élément 142. Le dispositif de coupure 15 peut fondre, pour ouvrir le circuit entre ses deux bornes, lorsque la température du troisième élément 143 est strictement supérieure au seuil de température. En effet, lors du contact électrique entre le premier élément 141 et l'organe élastique 1421, le contact électrique provoque le court-circuit de l'accumulateur 13 à travers le dispositif de coupure 15. Le dispositif de coupure 15 fond, ce qui provoque la déconnexion d'une des bornes de puissance 11, 12 de l'accumulateur 13. Du fait de cette déconnexion, l'accumulateur 13 n'est plus dans le circuit de courant et n'est donc plus traversé par un courant. La cause du mécanisme de défaut de type surcharge, sur-décharge ou surchauffe d'un accumulateur 13 ayant une trop grande résistance interne (dû au vieillissement par exemple) est alors interrompue.

Selon un exemple, l'unité de stockage 1 comprend, en outre, une première borne principale BP1, couplée électriquement à l'une parmi la première borne de puissance 11 ou la deuxième borne de puissance 12 par l'intermédiaire du dispositif de coupure 15. L'unité de stockage 1 comprend également une deuxième borne principale BP2 couplée électriquement à l'autre parmi la deuxième borne de puissance 12 ou la première borne de puissance 11. Plus précisément, la première borne principale BP1 est couplée à une borne positive et la deuxième borne principale BP2 est couplée à une borne négative. Ainsi, dans les exemples illustrés aux figures 1 à 3A, 4A à 5A, 7 la première borne principale BP1 est couplée électriquement à la deuxième borne de puissance 12 et la deuxième borne principale BP2 est couplée à la première borne de puissance 11. Dans les exemples illustrés aux figures 3B, 3D, 5B, 6A, la première borne principale BP1 est couplée électriquement à la première borne de puissance 11 et la deuxième borne principale BP2 est couplée à la deuxième borne de puissance 12. La déconnexion du dispositif de coupure 15 permet ainsi de réaliser un pontage entre la première borne principale BP1 et la deuxième borne principale BP2. La batterie 2 continue à fonctionner avec les autres accumulateurs 13 avec une tension inférieure du fait de la perte de la tension de l'accumulateur 13 ou des accumulateurs 13 en défaut.

Selon un exemple, le seuil de température est compris entre 60°C et 100°C. De préférence, le seuil de température est compris entre 60°C et 80°C. Ainsi, le troisième élément 143 peut présenter avantageusement une température de fusion supérieure à la température maximale de fonctionnement d'un accumulateur 13 mais inférieure à la température d'emballement de l'accumulateur 13. De manière similaire, le troisième élément peut être à base d'un matériau dont le seuil de température de fluage permet une transition de phase et est compris entre 60°C et 100°C, de préférence entre 60°C et 80°C.

Selon un exemple, le troisième élément 143 est un polymère, par exemple un polymère pris parmi la polyoléfine, le polyéthylène basse densité, les copolymères d'éthylène, les copolymères de propylène. Le troisième élément 143 peut, à l'atteinte du seuil de température, fondre, c'est-à-dire effectuer une transition solide vers liquide, soit comme c'est le cas pour de nombreux matériaux polymère effectuer une transition de phase où il perd sa résistance mécanique, flue et permet alors au contact électrique de la traverser, et permet donc un contact électrique entre le premier élément 141 et l'organe élastique 1421.

Selon un exemple, l'organe élastique 1421 comprend une pièce ressort. La pièce ressort peut être configurée pour venir en contact électrique avec le premier élément conducteur 141 lorsque la température du troisième élément 143 est strictement supérieur au seuil de température. Ainsi, lorsque le troisième élément 143 se déforme, au moins une partie de la pièce ressort entre en contact électrique avec le premier élément conducteur 141. Dans cette configuration, la pièce ressort peut alors provoquer le court-circuit de l'accumulateur 13.

Selon un exemple, l'organe élastique 1421 comprend au moins une zone de contact. Chaque zone de contact peut être configurée pour être en contact avec l'au moins une deuxième zone de la deuxième surface 143b du troisième élément 143. De préférence, l'organe élastique1421 comprend une pluralité de zone de contact. L'organe élastique1421 peut avoir une seule zone de contact au niveau de la pièce ressort, ou plusieurs zones de contact selon le niveau de résistance parasite maximale souhaitée pour la fonction de pontage. La fonction de pontage est définie par le niveau de pertes électriques acceptable, selon le niveau de courant traversant le pontage, pour limiter l'augmentation de température locale due à ces pertes.

Ainsi, pour une batterie 2 comprenant une mise en série d'accumulateurs 13 de quelques ampères-heures qui vont être traversés par des courants ne dépassant pas quelques ampères, l'invention peut être utilisée avec une seule zone de contact. Dans cette configuration, l'organe élastique 1421 peut comprendre un unique doigt de contact ressort en appui sur le troisième élément isolant thermique thermo-déformable 143. En d'autres termes, le doigt est mis sous contrainte par le troisième élément 143 occupant le premier état.

Pour des niveaux de courants supérieurs, une pluralité de points de contacts après fusion du troisième élément isolant thermique thermo-déformable 143 peut assurer une résistance de contact suffisamment faible pour limiter l'échauffement dû aux résistances parasites de ces contacts. Selon le courant de court-circuit de l'accumulateur 13 existant lors de l'apparition du pontage, jusqu'à l'instant de fusion du dispositif de coupure 15 qui interrompt ce courant de court-circuit, certaines zones de contacts peuvent être soudées par le courant de court-circuit. On a alors une soudure électrique semblable à celles utilisées pour le raccordement des petits accumulateurs 13 cylindriques dans les packs batterie 2. Cette soudure procure une résistance de contact minimisée.

Selon un exemple, l'organe élastique 1421 est en un matériau élastique. L'organe élastique 1421, lorsqu'il est mis sous contrainte, applique ainsi une force avec l'au moins une deuxième zone de la deuxième surface 143b du troisième élément 143 et peut se déformer de façon élastique dans le cadre du mouvement de l'organe élastique 1421. Par exemple, l'organe élastique 1421 comprend au moins une partie mobile en déplacement par rapport au premier élément 141, entre une première position, dans laquelle le troisième élément 143 occupe le premier état et ladite au moins une partie mobile est isolée électriquement avec le premier élément 141, et une deuxième position, dans laquelle le troisième élément 143 occupe le deuxième état et ladite au moins une partie mobile est en contact avec le premier élément 141.

Selon un exemple illustré en figure 1, l'accumulateur 13 est un accumulateur 13 cylindrique. Le système de protection 14 peut alors être positionné sur une paroi de l'accumulateur 13 cylindrique. Plus précisément, le système de protection 14 peut être configuré pour entourer l'accumulateur 13. Dans cette configuration, la deuxième borne de puissance 12 peut être connectée à une première borne du dispositif de coupure 15. Le pontage de l'accumulateur 13 connecté en série avec le dispositif de coupure 15, peut s'effectuer par le système de protection 14, dont la figure 2 est une vue en coupe.

Selon l'exemple illustré en figure 1 et 2, le deuxième élément conducteur électrique 142 est en contact avec l'organe élastique 1421 permettant d'assurer au moins une zone de contact, et de manière préférée une pluralité de zones de contacts sur le troisième élément isolant thermique thermo-déformable 143, plus précisément sur la deuxième face 143b du troisième élément 143. La première face 143a du troisième élément isolant thermique thermo-déformable 143 peut être au contact du premier élément conducteur électrique 141 relié à la première borne de puissance 11 de l'accumulateur 13. Dans l'exemple illustré aux figures 1 et 2, la première borne de puissance 11 correspond au pôle moins de l'accumulateur 13. Dans cet exemple, le premier élément conducteur électrique 141 est le godet de l'accumulateur 13. Ainsi, le troisième élément isolant thermique thermo-déformable 143 est au contact du godet de l'accumulateur 13 constituant le pôle moins de l'accumulateur 13. Le dispositif de coupure 15 est couplé électriquement par une de ces bornes à la première borne de puissance 11 et par une autre de ces bornes au deuxième élément conducteur électrique 142. La deuxième borne de puissance 12 est, dans cet exemple, le pôle positif de l'accumulateur 13.

Ainsi, en cas d'échauffement de l'accumulateur 13, par exemple suite à une surcharge ou une sur-décharge que le système de gestion n'a pas pu interrompre suite à sa propre défaillance ou celle des dispositifs d'interruptions ayant une défaillance en mode court-circuit, ou suite à un échauffement de l'accumulateur 13 du fait de l'augmentation de sa résistance interne en fin de vie, la température de l'accumulateur 13 est transmise par conduction thermique au premier élément conducteur électrique 141. De manière préférée, le premier élément conducteur électrique 141est constitué de cuivre ou de cuivre revêtu tel de l'argent, du nickel ou de l'or. Cela permet ainsi d'avoir une bonne conductivité électrique et améliorer la résistance à la corrosion du matériau. Lorsque la température du premier élément conducteur électrique 141 atteint et dépasse le seuil de température, le troisième élément 143 se déforme de sorte à permettre un contact électrique entre le premier 141 et l'organe élastique 1421 conducteur électrique. Ce contact électrique provoque le court-circuit de l'accumulateur 13 à travers le dispositif de coupure 15. Celui-ci fond, ce qui provoque la déconnexion d'une des bornes de l'accumulateurs 13. Du fait de cette déconnexion, l'accumulateur n'est plus dans le circuit de courant et n'est donc plus traversé par un courant.

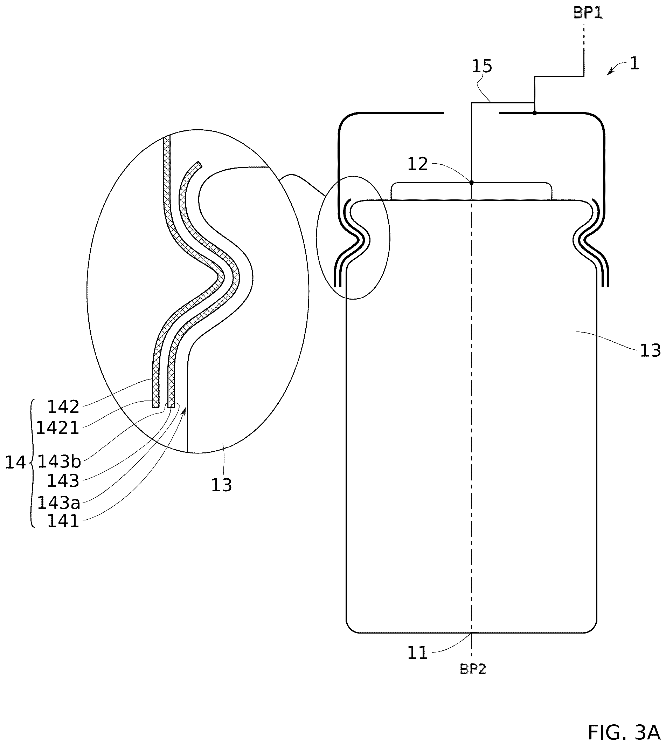

Selon un mode de réalisation illustré en figure 3A, le système de protection 14 s'enclenche au niveau de la deuxième borne de puissance 12 qui est une borne positive de l'accumulateur 13. L'organe élastique 1421 peut comprendre plusieurs doigts ressorts répartis circulairement qui appuient sur le troisième élément isolant thermique thermo-déformable 143. Dans cet exemple, c'est le godet de l'accumulateur 13 qui assure la fonction de premier élément conducteur électrique 141. Le dispositif de coupure 15 peut être réalisé comme représenté par un fil fin, par exemple de type « wire bonding », en langue anglaise, c'est-à-dire un câblage par fil. Par exemple, un fil en aluminium soudé par soudure ultrasonique aux deux extrémités, l'accès au pôle positif de l'accumulateur 13 pour la soudure se faisant par un trou central tel que représenté par exemple.

Selon ce mode de réalisation, sur un accumulateur 13 cylindrique, la deuxième borne de puissance 12 positive de l'accumulateur 13 est classiquement réalisée par un assemblage de pièces conductrices et isolantes qui sont montées dans le godet par sertissage. Ce sertissage donne lieu à une gorge circulaire de maintien de l'assemblage des pièces mécaniques du pôle positif. La variante de réalisation présente un mode de réalisation où le troisième élément 143 est placé au niveau de la gorge, et où la fonction élastique de l'organe élastique 1421 est réalisée par des doigts ressort élastiques avec une partie courbée se positionnant sur le troisième élément 143, dans la gorge du godet de l'accumulateur 13. L'invention assure alors un déclenchement naturel de la fonction de pontage, ne nécessitant ni capteur ni aucune électronique pouvant être sujette à défaut. Le pontage active la fusion du dispositif de coupure 15, dont la matière et/ou la chaleur générée vient activer une chambre de pontage présentant une résistance résiduelle de quelques centaines de micro-ohms, adaptée pour être traversée par un courant de plusieurs centaines d'ampères sans échauffement prohibitif.

Selon un mode de réalisation illustré en figure 3B et 3C, l'accumulateur 13 est un accumulateur 13 en sachet souple. Selon cet exemple, les fonctions de dispositif de coupure 15 et du système de protection 14 sont intégrées à l'accumulateur 13. En outre, l'unité de stockage 1 comprend une première borne principale BP1, couplée électriquement à la première borne de puissance 11, par l'intermédiaire du dispositif de coupure 15. L'unité de stockage 1 comprend également une deuxième borne principale BP2 couplée électriquement à la deuxième borne de puissance 12. La fonction de dispositif de coupure 15 peut alors être réalisée par une zone de section réduite entre la première borne de puissance 11 et la première borne principale BP1, ici positive, de l'accumulateur 13. La fonction de pontage s'effectue par le système de protection 14, le deuxième élément conducteur électrique 142 peut alors être relié dans ce mode de réalisation à la deuxième borne de puissance 12, et à la deuxième borne principales BP2, négative, de l'accumulateur 13, et outre être relié à une pluralité de zones de contacts de l'organe élastique 1421 permettant d'assurer une multitude de points de contacts sur la deuxième face 143b du troisième élément isolant thermique thermo-déformable 143. La première face du troisième élément isolant thermique thermo-déformable 143 peut être au contact du premier élément conducteur électrique 141 relié à la première borne de puissance 11, avantageusement par l'intermédiaire du dispositif de coupure 15, et à la deuxième borne principale BP1 de l'accumulateur 13, ici le pôle positif dans ce mode de réalisation. Le troisième élément isolant thermique thermo-déformable 143 peut alors être au contact thermique de l'accumulateur 13 par l'intermédiaire des premier et deuxième éléments 141, 142 reliés aux deux bornes de puissance 11, 12.

Dans ce mode de réalisation les deux faces des premier et deuxième éléments mécaniques 141 et 142 sont utilisées. En effet, le deuxième élément 142 peut être relié à deux rangées de contacts ressorts de l'organe élastique 1421 pour pincer le premier élément conducteur électrique 141 revêtu du troisième élément isolant thermique thermo-déformable 143. Outre l'augmentation du nombre de contacts électriques après déformation du troisième élément 143, le pincement entre les deux rangées de contacts ressort assure une partie de maintien mécanique entre le premier élément 141 et le deuxième élément 142.

Le système de protection peut aussi être positionné au contact du cœur électrochimique. Le positionnement du système de protection 14 entre la première 11 et la deuxième 12 bornes de puissances, à l'intérieur de l'accumulateur 13 est préféré, car il permet de ne pas augmenter l'épaisseur de l'accumulateur 13 permettant ainsi une meilleure densité d'intégration dans le pack batterie.

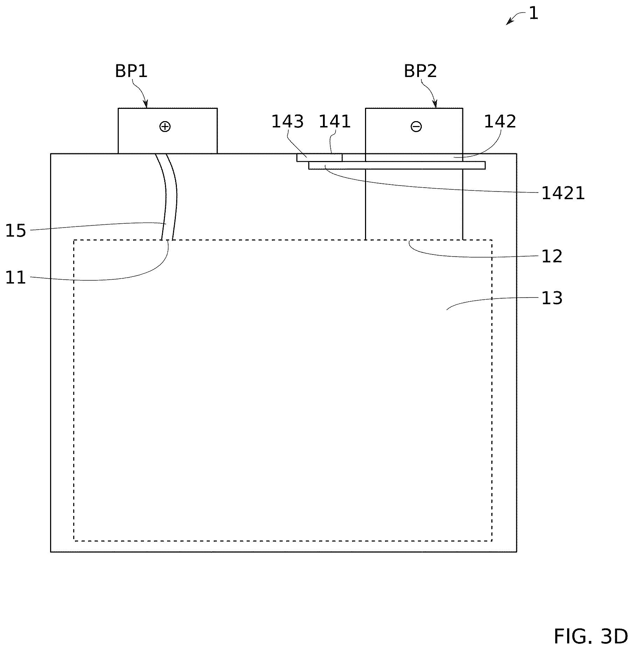

Selon un mode de réalisation illustré en figure 3D, on a représenté l'unité 1 pour un boîtier de type pavé droit, appelé parallélépipède rectangle dans le domaine des batteries boîtier prismatique. Le boîtier est ici relié au pôle positif BP1 de l'accumulateur 13 tel que le permettent les boîtiers à base d'aluminium. Le dispositif de coupure 15 peut être réalisé par une section réduite d'une feuille métallique, par exemple un clinquant, c'est-à-dire une feuille en acier ou en laiton, par exemple en acier inoxydable, reliant le ou les bobinages ou empilages du cœur électrochimique à la première borne principale BP1 positive. Le système de protection 14 est ici réalisé par le troisième élément isolant thermique thermo-déformable 143. Le troisième élément 143 peut alors être au contact de la face interne du boîtier et d'une pluralité de contacts de l'organe élastique1421 reliés à la deuxième borne principale BP2 négative.

L'invention telle qu'exposée est basée sur, au moins, un premier élément 141 présentant un contact ponctuel ou une zone de contact fixe, un organe élastique 1421 mobile soumis à une force par une fonction ressort ou élastique apte à restituer une force de contrainte et un isolant électrique thermo-déformable 143 placé entre le premier élément et l'organe élastique 1421.

Les différentes variantes exposées utilisent un ou une pluralité de contacts d'un organe élastique 1421 soumis à une force par une fonction ressort. Une variante est d'utiliser un matériau élastique apte à exercer une force de contrainte pour déplacer le contact mobile ou une pluralité de contacts mobiles.

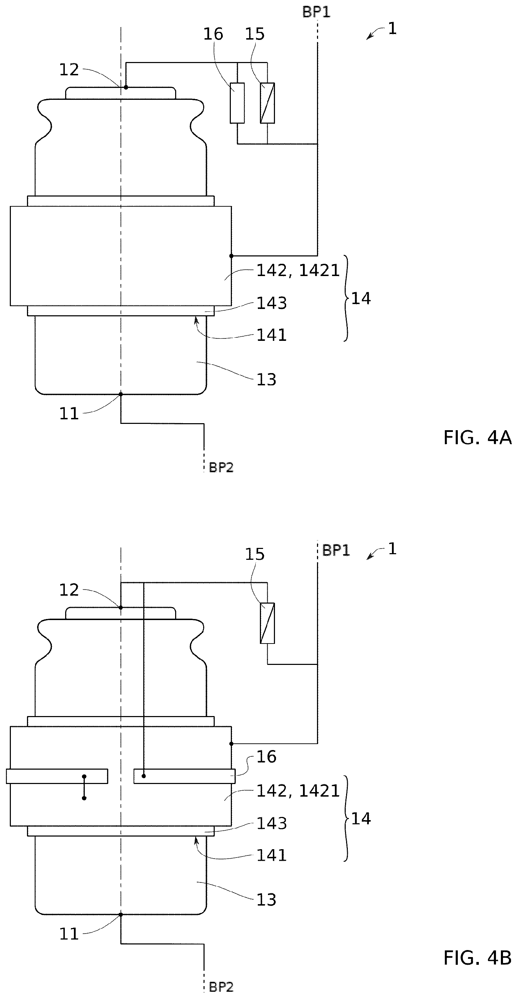

Selon un mode de réalisation illustré en figures 4A et 4B, le système de protection 14 comprend une résistance 16. La résistance 16 peut être couplée en parallèle aux deux bornes du dispositif de coupure 15. La résistance 16 peut être configurée de sorte à décharger l'accumulateur 13. La résistance 16 permet ainsi d'augmenter fortement la sécurité puisque l'accumulateur 13 déchargé ne renfermera plus une énergie électrique interne suffisante apte à initier un emballement thermique. La plage normale de variation de la tension des accumulateurs 13 est de 2 V à 4,2 V pour les chimies lithium-ion à base d'oxyde de Nickel Cobalt et Aluminium (NCA) et celle à base d'oxyde de Nickel Manganèse et Cobalt (NMC), avec une tension moyenne de 3,7 V. Pour la chimie lithium-ion à base de phosphate de fer (LFP), la plage de tension va de 2 V à 3,6 V avec un plateau sur la courbe à 3,3 V, pouvant aller de 10% à 90% d'état de charge. Une résistance 16 de 22 ohms, par exemple, permettra de limiter la puissance dissipée à moins d'un watt et de décharger totalement l'accumulateur 13 de n ampères heures dans une durée de l'ordre de 6 x n dizaines d'heures, avec n un nombre entier qui peut être compris de préférence entre 1 et 10. Pour des accumulateurs de capacités plus élevés dont la taille permet d'évacuer un flux de chaleur supérieur, une résistance 16 de 2,2 ohms, par exemple, permettra de limiter la puissance dissipée à moins de dix watts et de décharger totalement l'accumulateur 13 de n ampères heures dans une durée de l'ordre de 0,6 x n dizaines d'heures, avec n un nombre entier qui peut être compris de préférence entre 10 et 100.

Selon l'exemple illustré en figure 4A, la résistance 16 est positionnée en contact thermique avec le troisième élément 143. Cela permet ainsi de poursuivre la fusion du troisième élément 143, plus particulièrement, dans le cas des réalisations avec une pluralité de zones de contacts entre l'organe élastique 1421 et le troisième élément 143, afin que chaque contact puisse relier les premier 141 et deuxième 142 éléments conducteurs sans qu'il reste des contacts isolés par le matériau du troisième élément 143 non fondu localement. Par cette pluralité de zones de contacts, on minimise la résistance résiduelle du pontage, et donc les pertes d'énergie dans celui-ci lorsqu'il est traversé par un courant.

Selon l'exemple illustré en figure 4B, la résistance 16 est positionnée en contact thermique avec le deuxième élément 142. Cela permet de transmettre sa chaleur à l'organe élastique 1421 et ainsi poursuivre la fusion du troisième élément 143.

De manière préférée, la résistance 16 peut être réalisée par un dépôt conducteur ou semi-conducteur sur un ruban isolant qui peut être collé sur le deuxième élément 142.

Selon un exemple, la résistance 16 est de type résistance à coefficient de température (CTP). La résistance 16 peut être configurée de sorte à avoir une température de transition supérieure au seuil de température. Par exemple, la résistance 16 est sélectionnée pour avoir une température de transition supérieure à la température de fusion du matériau du troisième élément 143.

Un autre aspect de l'invention est une batterie 2 comprenant une pluralité d'unité de stockage 1. La pluralité d'unité de stockage 1 peut alors être connectées entre elles par leurs première 11 et deuxième 12 bornes de puissance respectives.

Selon un exemple, illustré à la figure 5A, une batterie 2 peut comprendre au moins deux unités de stockage 1 connectées en parallèle.

Selon cet exemple, en cas d'échauffement d'au moins l'un des deux accumulateurs 13, par exemple suite à une surcharge ou une sur-décharge qu'un système de gestion (BMS) n'a pas pu interrompre ou suite à un échauffement de l'accumulateur 13 du fait de l'augmentation de sa résistance interne en fin de vie, la température d'au moins l'un des deux accumulateurs 13 est transmise par conduction thermique au premier élément conducteur électrique et thermique 141. Lorsque la température du premier élément 141 atteint la température de fusion du matériau du troisième élément 143, un contact électrique s'établit entre les premier 141, deuxième 142 éléments conducteurs électriques et l'organe élastique 1421. Ce contact électrique provoque le court-circuit de chacun des accumulateurs 13 de la mise en parallèle à travers un dispositif de coupure 15. Le dispositif de coupure 15 fond pour tous les accumulateurs de la mise en parallèle, ce qui provoque pour tous les accumulateurs la déconnexion d'une des bornes de l'accumulateur auquel le dispositif de coupure 15 est connecté. Du fait de cette déconnexion, l'accumulateur 1 n'est plus dans le circuit de courant et n'est donc plus traversé par un courant.

D'autre part, toujours selon cet exemple, le contact électrique entre le premier élément 141 et le deuxième élément 142 conducteurs électriques donne lieu à un court-circuit des première 11 et deuxième 12 bornes de puissance qui assure une fonction de pontage, qui laisse alors passer le courant de la mise en série d'accumulateurs 13. Plus précisément, la fonction de pontage est réalisée entre BP1 et BP2. La batterie 2 continue à fonctionner avec les autres accumulateurs 13 avec une tension inférieure du fait de la perte de la tension de l'accumulateur 13 en défaut.

De manière préférée, pour chacun des accumulateurs 13 de la batterie 2, une résistance 16 est placée en contact thermique avec le troisième élément 143 pour poursuivre la fusion de ce dernier.

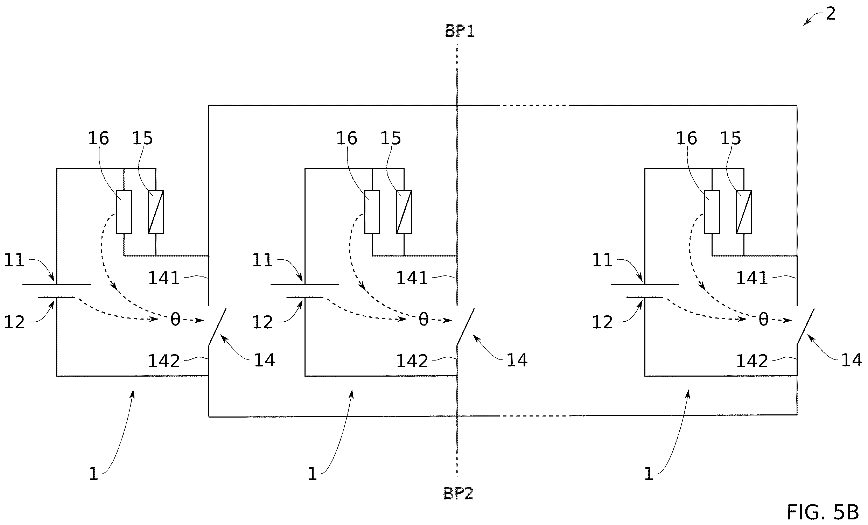

Le mode de réalisation de la figure 5B est une représentation électrique et thermique simplifiée de l'invention. Selon ce mode de réalisation, l'activation d'un pontage provoque la circulation d'un courant de court-circuit de chacun des accumulateurs 13 qui donne lieu à la fusion du dispositif de coupure 15 de chacun de ces accumulateurs 13. Ainsi, la tension de l'accumulateur 13 en défaut est appliquée aux bornes du dispositif de coupure 15 qui s'est ouvert et de la résistance 16. La chaleur dissipée dans la résistance 16 poursuit la fusion du matériau du troisième élément 143 de l'accumulateur 13 en défaut et permet la fusion du matériau du troisième élément 143 des autres accumulateurs. Ceci permet que chaque contact ou pluralité de contacts de chaque accumulateur 13 puisse relier les premier 141, deuxième 142 éléments conducteurs électriques et l'organe élastique 1421. On a alors une fonction de pontage sur chaque accumulateur 13. Par cette mise en parallèle de pontages, on minimise la résistance résiduelle de la fonction pontage des accumulateurs 13 en parallèle, et donc les pertes d'énergie entre les bornes BP1 et BP2 traversées par le courant de la batterie.

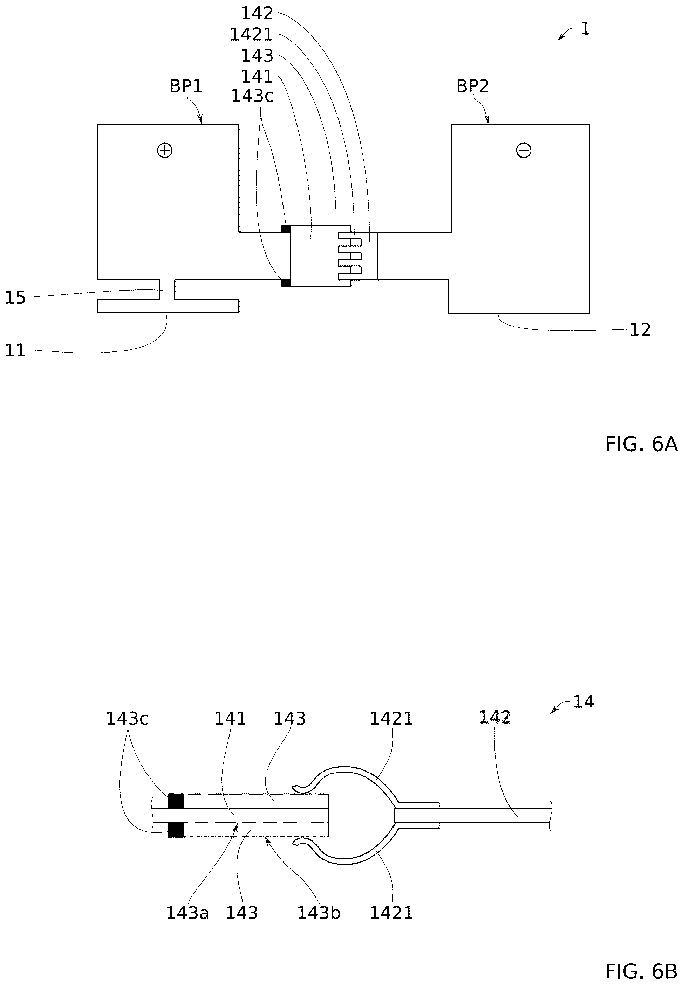

Selon un autre mode de réalisation, le troisième élément 143 est un polymère rétractable. Ainsi, lorsque le troisième élément 143 atteint un seuil de température de rétractation, il y a un contact direct entre le premier 141 et l'organe élastique 1421. Ce mode de réalisation est illustré aux figures 6A et 6B. Le troisième élément 143 peut alors être configuré de sorte à être maintenu mécaniquement par un élément de maintien 143c. L'élément de maintien peut être un élément mécanique ou est de préférence effectué par un collage. Plus précisément, l'élément de maintien 143c peut être positionné au niveau du premier élément conducteur 141. Par exemple, l'élément de maintien 143c peut être un polymère rétractable sous une forme de manchon rétractable pour protéger les jonctions entre conducteurs électriques. Ainsi, selon un exemple, le troisième élément 143 est à base de caoutchouc, de silicone ou de polymères fluorés.

Selon ce mode de réalisation, la rétractation du troisième élément 143 permet à l'organe élastique 1421 d'être en contact mécanique, c'est-à-dire un couplage électrique direct, avec le premier élément 141 conducteur électrique et d'assurer ainsi la fonction de pontage.

Le mode de réalisation de la figure 7 présente un exemple de réalisation sur deux accumulateurs 13 cylindriques en parallèle, avec une résistance 16 placée en parallèle de chaque dispositif de coupure 15 pour chaque accumulateur 13. Lorsque la température d'un accumulateur 13 atteint celle de rétreint du troisième élément 143, les contacts de l'organe élastique 1421 sont mis en contact avec le premier élément 141. On a alors pontage entre le premier élément 141 et le deuxième élément 142. Le courant de court-circuit de l'accumulateur 13 en défaut provoque la fusion de son dispositif de coupure 15. La tension aux bornes de l'accumulateur 13 en défaut est alors appliquée aux bornes de sa résistance 16 qui élève en température le troisième élément 143, et donc poursuit la rétractation de ce dernier, pour continuer à dégager les contacts de l'organe élastique 1421 et de minimiser la résistance de contact résiduelle de la fonction de pontage.

Une application intéressante de l'invention est le domaine des transports et plus particulièrement les véhicules électriques ou hybrides. En effet, les demandes ainsi que les contraintes dans le domaine des véhicules électriques tendent à s'intensifier tout comme les risques liés à l'utilisation de technologies d'accumulateurs représentant des énergies embarquées de plus en plus importantes en fonction de l'augmentation des autonomies des véhicules. Il est alors capital de fournir des systèmes de sécurité minimisant le risque d'emballement du pack batterie et ce quelle que soit la nature du défaut, interne ou externe.

L'invention permet aussi d'apporter une continuité de service du pack batterie. Pour un véhicule routier, cela permet d'offrir la possibilité d'aller se garer en sécurité, ou de terminer le trajet selon la gravité du défaut ayant déclenché le dispositif d'isolement d'un accumulateur défectueux.

### REFERENCES NUMERIQUES

- 1 :: Unité de stockage
- 11 :: première borne de puissance
- 12 :: deuxième borne de puissance
- 13 :: accumulateur
- 14 :: système de protection
- 141 :: premier élément conducteur électrique
- 142 :: deuxième élément conducteur électrique
- 1421 :: organe élastique
- 143 :: troisième élément isolant thermique thermo-déformable
- 143a :: première surface du troisième élément
- 143b :: deuxième surface du troisième élément
- 143c :: élément de maintien
- 15 :: dispositif de coupure
- 16 :: résistance
- 2 :: batterie
- BP1 :: première borne principale
- BP2 :: deuxième borne principale

## Revendications

1. Unité de stockage d'énergie électrique (1), comprenant :
• des première (11) et deuxième (12) bornes électriques, dites de puissance,
• un accumulateur (13) couplé électriquement aux première (11) et deuxième (12) bornes de puissance, et
• un système de protection (14) du type court-circuit, le système de protection (14) comprenant :
∘ un premier élément (141) conducteur électrique couplé électriquement à la première borne de puissance (11),
∘ un deuxième élément (142) conducteur électrique couplé électriquement à la deuxième borne de puissance (12), et
∘ un organe élastique (1421) conducteur électrique couplé électriquement au deuxième élément (142) ;
**caractérisé en ce que** le système de protection (14) comprend un troisième élément (143) isolant électrique et thermo-déformable, le troisième élément (143) étant configuré pour occuper un premier état, lorsqu'une température du troisième élément (143) est inférieure ou égale à un seuil de température, dans lequel le troisième élément (143) isole électriquement l'organe élastique (1421) avec le premier élément (141), et pour occuper un deuxième état, lorsque la température du troisième élément (143) est strictement supérieure au seuil de température, dans lequel le troisième élément (143) se déforme pour que l'organe élastique (1421) vienne au contact du premier élément (141).

2. Unité de stockage d'énergie électrique (1) selon la revendication précédente, dans laquelle le troisième élément (143) est configuré pour coopérer avec l'organe élastique (1421) de sorte que, lorsque le troisième élément (143) occupe le premier état, le troisième élément (143) met l'organe élastique (1421) sous contrainte, et lorsque le troisième élément (143) occupe le deuxième état, le troisième élément (143) se déforme pour permettre un relâchement de la contrainte exercée sur l'organe élastique (1421).

3. Unité de stockage d'énergie électrique (1) selon l'une quelconque des revendications précédentes, dans laquelle lorsque le troisième élément (143) occupe le premier état, le troisième élément (143) est placé entre l'organe élastique (1421) et le premier élément (141).

4. Unité de stockage d'énergie électrique (1) selon l'une quelconque des revendications précédentes, dans laquelle l'organe élastique (1421) comprend une pièce ressort.

5. Unité de stockage d'énergie électrique (1) selon l'une quelconque des revendications précédentes, dans laquelle l'organe élastique (1421) comprend au moins une partie mobile en déplacement par rapport au premier élément (141), entre une première position, dans laquelle le troisième élément (143) occupe le premier état et ladite au moins une partie mobile est isolée électriquement avec le premier élément (141), et une deuxième position, dans laquelle le troisième élément (143) occupe le deuxième état et ladite au moins une partie mobile est en contact avec le premier élément (141).

6. Unité de stockage d'énergie électrique (1) selon l'une quelconque des revendications précédentes, dans laquelle, le seuil de température est compris entre 60°C et 100°C, de préférence entre 60°C et 80°C.

7. Unité de stockage d'énergie électrique (1) selon l'une quelconque des revendications précédentes, dans laquelle, le troisième élément (143) est un polymère, par exemple un polymère pris parmi la polyoléfine, le polyéthylène basse densité, les copolymères d'éthylène, les copolymères de propylène.

8. Unité de stockage d'énergie électrique (1) selon l'une quelconque des revendications 1 à 7, dans laquelle, le troisième élément (143) est un polymère rétractable.

9. Unité de stockage d'énergie électrique (1) selon la revendication précédente, dans laquelle, le système de protection (14) comprend un élément de maintien (143c) configuré pour maintenir mécaniquement le troisième élément (143) en contact avec le premier élément conducteur (141).

10. Unité de stockage d'énergie électrique (1) selon l'une quelconque des revendications précédentes, dans laquelle, le système de protection (14) comprend un dispositif de coupure (15), le dispositif de coupure (15) ayant deux bornes couplées électriquement, soit respectivement avec la première borne de puissance (11) et le premier élément (141), soit respectivement avec la deuxième borne de puissance (12) et le deuxième élément (142), le dispositif de coupure (15) étant configuré de sorte à fondre pour ouvrir le circuit entre ses bornes lorsque la température du troisième élément (143) est strictement supérieure au seuil de température.

11. Unité de stockage d'énergie électrique (1) selon la revendication précédente, dans laquelle, le système de protection (14) comprend une résistance (16), la résistance (16) étant couplée électriquement en parallèle des deux bornes du dispositif de coupure (15), la résistance (16) étant configurée de sorte à décharger l'accumulateur (13) lorsque le dispositif de coupure (15) a fondu pour ouvrir le circuit entre ses bornes.

12. Unité de stockage d'énergie électrique (1) selon la revendication précédente, dans lequel la résistance (16) est positionnée en contact thermique avec le troisième élément (143).

13. Unité de stockage d'énergie électrique (1) selon la revendication 11, dans laquelle la résistance (16) est positionnée en contact thermique avec le deuxième élément (142).

14. Batterie (2) comprenant une pluralité d'unités de stockage d'énergie électrique (1) selon l'une quelconque des revendications précédentes, les unités de stockage d'énergie électrique (1) étant couplées électriquement entre elles par leurs première (11) et deuxièmes (12) bornes de puissances respectives.

15. Batterie (2) selon la revendication précédente, dans laquelle chaque système de protection (14) comprend un dispositif de coupure (15).
